# EUROPÄISCHE PATENTANMELDUNG

(11) **EP 3 216 764 A1**
(43) Veröffentlichungstag der Anmeldung: **13.09.2017**
(21) Anmeldenummer: 16159506.1
(22) Anmeldetag: 09.03.2016
(51) Int. Cl.: C01G 49/06, C09C 1/24, B01J 8/22

(54) **HERSTELLUNG VON EISENOXID-ROT-PIGMENTEN**

(71) Anmelder: LANXESS Deutschland GmbH, 50569 Köln (DE)
(72) Erfinder: Czaplik, Waldemar, 41748 Viersen (DE); Holtmann, Udo, 51375 Leverkusen (DE)

(57) **Zusammenfassung**

Die vorliegende Erfindung betrifft ein verbessertes Verfahren zur Herstellung von Eisenoxid-Rot-Pigmenten nach dem Penniman-Verfahren mit Nitrat (auch Nitrat-Verfahren oder Direkt-Rot-Verfahren genannt) und Vorrichtungen zur Durchführung des Verfahrens.

## Beschreibung

Die vorliegende Erfindung betrifft ein verbessertes Verfahren zur Herstellung von Eisenoxid-Rot-Pigmenten nach dem Penniman-Verfahren mit Nitrat (auch Nitrat-Verfahren oder Direkt-Rot-Verfahren genannt) und eine Vorrichtung zur Durchführung dieses Verfahrens, sowie die Verwendung der Vorrichtung zur Herstellung von Eisenoxid-Rot-Pigmenten nach dem Penniman-Verfahren mit Nitrat.

Eisenoxide finden in vielen technischen Bereichen eine Anwendung. So werden sie beispielsweise als Farbpigmente in Keramiken, Baustoffen, Kunststoffen, Farben, Lacken und Papier eingesetzt, dienen als Grundlage für verschiedene Katalysatoren oder Trägermaterialien, können Schadstoffe adsorbieren oder absorbieren. Magnetische Eisenoxide finden Anwendungen in Magnetspeichermedien, Tonern, Ferrofluiden oder in medizinischen Anwendungen wie beispielsweise als Kontrastmittel für die Magnetresonanztomografie.

Eisenoxide lassen sich durch wässrige Fällungs- und Hydrolysereaktionen von Eisensalzen erhalten (Ullmann's Encyclopedia of Industrial Chemistry, VCH Weinheim 2006, Chapter 3.1.1., Iron Oxide Pigments, S. 61-67). Eisenoxidpigmente über den Fällungsprozess werden aus Eisensalzlösungen und alkalischen Verbindungen in Gegenwart von Luft erzeugt. Durch gezielte Steuerung der Reaktion lassen sich so auch feinteilige Goethit-, Magnetit- und Maghämit-Partikel darstellen. Die durch dieses Verfahren hergestellten Rotpigmente weisen jedoch eine vergleichsweise geringe Farbsättigung auf und finden ihren Einsatz deshalb vornehmlich in der Baustoffindustrie.

Die wässrige Herstellung von feinteiligem Hämatit, der der Modifikation α-Fe₂O₃ entspricht, ist jedoch deutlich aufwändiger. Durch Verwendung eines Reifungsschritts lässt sich unter Zugabe eines feinteiligen Eisenoxids der Modifikation Maghämit, γ-Fe₂O₃, oder Lepidokrokit, γ-FeOOH, als Keim auch durch eine direkte wässrige Fällung Hämatit herstellen [US 5,421,878; EP0645437; WO 2009/100767].

Eine weitere Methode zur Herstellung von Eisenoxid-Rot-Pigmenten ist der sogenannte Penniman-Prozess (US 1,327,061; US 1,368,748; US 2,937,927; EP 1106577A: US 6,503,315). Dabei werden Eisenoxidpigmente dadurch hergestellt, dass Eisenmetall unter Zusatz eines Eisensalzes und eines Eisenoxidkeims gelöst und oxidiert wird. So ist in SHEN, Qing; SUN, Fengzhi; Wujiyan Gongye 1997, (6), 5 - 6 (CH), Wujiyan Gongye Bianjib, (CA 128:218378n) ein Verfahren bekannt geworden, bei dem verdünnte Salpetersäure bei erhöhter Temperatur auf Eisen einwirkt. Hierbei entsteht eine Hämatit-Keimsuspension. Diese wird auf an sich bekannte Weise zu einer Suspension von Rotpigment aufgebaut, das Pigment wird aus dieser Suspension, falls gewünscht, auf an sich übliche Weise isoliert. Die durch dieses Verfahren hergestellten Rotpigmente weisen jedoch eine vergleichsweise geringe Farbsättigung auf, die ähnlich der Farbsättigung einer kommerziellen 130er-Norm sind, und finden ihren Einsatz deshalb vornehmlich in der Baustoffindustrie. Die 130er-Norm entspricht dem für Eisenoxidpigment-Farbmessungen gebräuchlichem Referenzstandard Bayferrox® 130. EP 1106577A offenbart eine Variante des Penniman-Verfahrens umfassend die Einwirkung von verdünnter Salpetersäure auf Eisen bei erhöhter Temperatur zur Erzeugung von Keimen, d.h. feinteiligen Eisenoxiden mit einer Teilchengröße kleiner als oder gleich 100 nm. Die Reaktion von Eisen mit Salpetersäure ist eine komplexe Reaktion und kann je nach Versuchsbedingungen entweder zu einer Passivierung des Eisens und damit einem Stillstand der Reaktion führen oder zu einem Auflösen des Eisens unter Bildung von gelöstem Eisennitrat. Beide Reaktionswege sind nicht erwünscht, und die Herstellung von feinteiligem Hämatit gelingt nur unter speziellen Bedingungen. EP 1106577A beschreibt derartige Bedingungen zur Herstellung von feinteiligem Hämatit. Dabei wird das Eisen mit verdünnter Salpetersäure bei Temperaturen zwischen 90 und 99°C zur Reaktion gebracht. WO 2013/045608 beschreibt ein Verfahren zur Herstellung von Eisenoxid-Rot-Pigmenten, bei dem der Reaktionsschritt der Herstellung der Keime, d.h. von feinteiligem Hämatit mit einer Teilchengröße kleiner als oder gleich 100 nm, verbessert wurde.

Das Penniman-Verfahren nach dem Stand der Technik wird in großtechnischem Maßstab bisher mit einfachen Mitteln durchgeführt. Beispielsweise wird der Pigmentaufbau, d.h. die Umsetzung von einer Hämatitkeim-Suspension mit Eisen unter Begasung mit Luft ohne mechanische oder hydraulische Durchmischung, durchgeführt. Die Begasung mit Luft führt hier zu einer starken Durchmischung der Reaktionsmischung. Das Penniman-Verfahren mit Salpetersäure wird in großtechnischem Maßstab (größer als 10 m³ Ansatzgröße) nach dem Stand der Technik typischerweise bei Begasungsvolumina von 7 bis 10 m³ pro Stunde und m³ Reaktionsmischung durchgeführt, wodurch in der Reaktionsmischung eine starke Konvektion und eine starke Blasenbildung, vergleichbar einem starken Sieden einer Flüssigkeit, an der Oberfläche der Reaktionsmischung erzeugt wird. Die nach dem Penniman-Verfahren hergestellten Hämatitpigmente weisen üblicherweise in der für Eisenoxid-Pigmente üblichen sogenannten Lackabtestung in einem thixotropierten langöligen Alkydharz (in Anlehnung an DIN EN ISO 11664-4:2011-07 und DIN EN ISO 787-25:2007) einen a*-Wert im Purton von >25 CIELAB-Einheiten auf.

Diese an sich effizienten Verfahren, die eine direkte Herstellung von hochwertigen roten Eisenoxiden mit einer großen Variation der Farbwerte ermöglichen, weisen jedoch folgende Nachteile auf:
1. Emission von Stickoxiden. Stickoxide können giftig sein (z.B. die nitrosen Gase NO, NO₂ und N₂O₄, auch generell als "NOₓ" bezeichnet), erzeugen Smog, zerstören unter UV-Bestrahlung die Ozonschicht der Atmosphäre und sind Treibhausgase. Gerade Distickstoffmonoxid ist ein ca. um den Faktor 300 stärkeres Treibhausgas als Kohlendioxid. Distickstoffmonoxid wird außerdem mittlerweile als stärkster Ozonkiller betrachtet. Bei dem Penniman-Verfahren mit Salpetersäure entstehen sowohl die nitrosen Gase NO und NO₂ als auch Distickstoffmonoxid in nennenswerten Mengen.
2. Bei dem Penniman-Verfahren mit Salpetersäure werden stickstoffhaltige Abwässer erzeugt, die in nennenswerten Mengen Nitrate, Nitrite und Ammoniumverbindungen enthalten.
3. Das Penniman-Verfahren mit Salpetersäure ist sehr energieaufwändig, weil große Volumina wässriger Lösungen auf Temperaturen von 60°C bis 120°C durch externe Energiezufuhr erhitzt werden müssen. Zusätzlich wird durch den Eintrag von größeren Mengen sauerstoffhaltigen Gasen als Oxidationsmittel in die Reaktionsmischung Energie aus dem Reaktionsgemisch ausgetragen (Dampf-Strippung), die wieder als Wärme extern zugeführt werden muss.

Stickoxide im Sinne der vorliegenden Erfindung sind Stickstoff-Sauerstoffverbindungen. Zu dieser Gruppe gehören die Nitrosen Gase der allgemeinen Formel NOₓ, wobei der Stickstoff unterschiedliche Oxidationszahlen zwischen +1 und +5 aufweisen kann. Beispiele hierfür sind NO (Stickstoffmonoxid, Oxidationszahl +2), NO₂ (Stickstoffdioxid, Oxidationszahl +4), N₂O₅ (Oxidationszahl +5). NO₂ steht mit dessen Dimer N₂O₄ (beide Oxidationszahl +4) in einem temperatur- und druckabhängigem Gleichgewicht. Im Folgenden soll unter NO₂ sowohl NO₂ selbst als auch dessen Dimer N₂O₄ verstanden werden. N₂O (Distickstoffmonoxid, Lachgas, Oxidationszahl +1) gehört auch zu der Gruppe der Stickoxide, wird aber nicht zu den nitrosen Gasen gezählt.

Daher bestand die Aufgabe, ein effizientes und umweltfreundliches Verfahren zur Herstellung von Eisenoxid-Rot-Pigmenten bereitzustellen, das vorgenannte Nachteile vermeidet, wobei zum einen die Herstellung von Eisenoxid-Rot-Pigmenten mit einem breiten Farbspektrum in hoher Ausbeute erfolgt und wobei zum anderen der Anteil von an die Umwelt abgegebenen Stickoxiden und von an die Umwelt abgegebene Energie minimiert wird, und damit weniger Energie für die Herstellung der Eisenoxid-Rot-Pigmente erforderlich ist.

Es wurde nun ein Verfahren zur Herstellung von Eisenoxid-Rot-Pigmenten gefunden, das diese Aufgabe löst, sowie eine Vorrichtung bereitgestellt, in dem dieses Verfahren auch im industriellen Maßstab durchgeführt werden kann, umfassend die Umsetzung von zumindest
- Eisen und
- einer wasserhaltigen Hämatit-Keimsuspension, enthaltend Hämatit-Keime, die eine Teilchengröße von 100 nm oder weniger und eine spezifische BET-Oberfläche von 40 m²/g bis 150 m²/g, (gemessen nach DIN 66131) aufweisen, und
- einer Eisen(II)nitratlösung, und
- sauerstoffhaltigem Gas bei Temperaturen von 70 bis 120 °C, bevorzugt von 70 bis 99°C, wobei eine flüssige Reaktionsmischung erzeugt wird, die zumindest eine flüssige Phase und darin suspendiertes Hämatit enthält, wobei das sauerstoffhaltige Gas mit
- einem Begasungsvolumen von 0,5 bis 2 m³ sauerstoffhaltigem Gas pro m³ Reaktionsvolumen pro Stunde und einem Begasungsvolumen von 8 bis 32 m³, bevorzugt von 8 bis 24 m³, sauerstoffhaltigem Gas pro m² Begasungsfläche pro Stunde, oder
- einem Begasungsvolumen von 0,5 bis 1 m³ sauerstoffhaltigem Gas pro m³ Reaktionsvolumen pro Stunde und ein Begasungsvolumen von 8 bis 16 m³, bevorzugt von 8 bis 12 m³, sauerstoffhaltigem Gas pro m² Begasungsfläche pro Stunde, oder
- einem Begasungsvolumen von 1 bis 2 m³ sauerstoffhaltigem Gas pro m³ Reaktionsvolumen pro Stunde und ein Begasungsvolumen von 16 bis 32 m³, bevorzugt von 24 bis 32 m³, sauerstoffhaltigem Gas pro m² Begasungsfläche pro Stunde
in die flüssige Reaktionsmischung zugegeben wird.

Bevorzugt wird das erfindungsgemäße Verfahren ohne eine zusätzliche mechanische Durchmischung, beispielsweise ohne Propellerrührer, und / oder ohne eine zusätzliche hydraulische Durchmischung, beispielsweise ohne Umpumpung der flüssigen Reaktionsmischung, durchgeführt. In einer weiteren bevorzugten Ausführungsform wird das erfindungsgemäße Verfahren mit einer zusätzlichen mechanischen Durchmischung der flüssigen Reaktionsmischung, beispielsweise mittels eines Propellerrührers, und / oder durch eine zusätzliche hydraulische Durchmischung der flüssigen Reaktionsmischung, beispielsweise durch eine Umpumpung der flüssigen Reaktionsmischung, durchgeführt.

In einer Ausführungsform wird die Umsetzung so lange durchgeführt, bis das Hämatit-Pigment den gewünschten Farbton aufweist. Der gewünschte Farbton wird bei Eisenoxid-Rotpigmenten üblicherweise in einer Lackabtestung mit einem thixotropierten langöligen Alkydharz (in Anlehnung an DIN EN ISO 11664-4:2011-07 und DIN EN ISO 787-25:2007) durchgeführt. Zur Prüfung der Farbwerte von anorganischen Buntpigmenten wird das Pigment in einer Bindemittelpaste auf Basis eines nichttrocknenden langöligen Alkydharz (L64) dispergiert. Die pigmentierte Paste wird in einen Pastenteller eingestrichen und anschließend im Vergleich zum Bezugspigment farbmetrisch ausgewertet. Dabei werden die Farbmaßzahlen und Farbabstände im angenähert gleichförmigen CIELAB-Farbenraum in Purton und Aufhellung ermittelt. Für den Farbton des Pigments stellen die a*- und b*-Werte in der Lackabtestung die am besten geeigneten Parameter dar. Beispiele von solchen Farbwerten, und wie sie erzielt werden, sind in der PCT/EP2015/070745 offenbart.

In einer weiteren Ausführungsform umfasst das erfindungsgemäße Verfahren die Abtrennung des Hämatit-Pigments von der Hämatit-Pigmentsuspension nach üblichen Methoden.

Die Umsetzung von Eisen, Hämatit-Keimsuspension und Eisen(II)nitratlösung in Gegenwart von zumindest einem sauerstoffhaltigen Gas bei Temperaturen von 70 bis 120 °C, bevorzugt von 70 bis 99°C wird auch Pigmentaufbau genannt.

Erfindungsgemäß wird die Begasungsfläche als die Fläche definiert, die die Vorlage für Eisen bildet. Auf der Vorlage kommt das eingesetzte Eisen im Reaktionsbehälter typischerweise zu liegen. Dies gilt insbesondre dann, wenn eine äußere Begrenzung orthogonal zu der Vorlage für Eisen steht, beispielsweise in dem Fall, wenn die Vorlage für Eisen und die äußere Begrenzung einen oben offenen Zylinder oder einen oben offenen Quader bilden. In einer alternativen Ausführungsform wird die Begasungsfläche erfindungsgemäß als die horizontale Fläche innerhalb der äußeren Begrenzung definiert, oberhalb der sich 90% des Volumens befinden, das von der Vorlage für Eisen und der äußeren Begrenzung eingefasst wird. Dies gilt insbesondre dann, wenn eine äußere Begrenzung nicht orthogonal zu der Vorlage für Eisen steht, beispielsweise in dem Fall, wenn die Vorlage für Eisen und die äußere Begrenzung einen oben offenen Trichter bilden und/oder die Vorlage für Eisen nicht plan, sondern beispielsweise gewölbt ist.

Das Begasungsvolumen an sauerstoffhaltigem Gas wird dabei als Volumen definiert, das über geeignete Vorrichtungen in die flüssige Reaktionsmischung eingebracht wird. Das Reaktionsvolumen wird als Summe des Volumens der flüssigen Reaktionsmischung und des Volumens des Eisens definiert.

Die im erfindungsgemäßen Verfahren eingesetzten Eisen(II)nitratlösungen sind aus dem Stand der Technik bekannt. Hierzu wird auf die Beschreibung des Standes der Technik verwiesen. Typischerweise weisen diese Eisen(II)nitratlösungen Konzentrationen von 50 bis 150 g/l Fe(NO₃)₂ (Angabe Fe(NO₃)₂ bezogen auf wasserfreie Substanz) auf. Neben Fe(NO₃)₂ können die Eisen(II)nitrat-Lösungen auch Mengen von 0 bis 50 g/l Fe(NO₃)₃ enthalten. Vorteilhaft sind jedoch möglichst niedrige Mengen an Fe(NO₃)₃.

Die im erfindungsgemäßen Verfahren eingesetzten wässrigen Hämatit-Keimsuspensionen und die darin enthaltenen Hämatit-Keime sind aus dem Stand der Technik bekannt. Hierzu wird auf die Beschreibung des Standes der Technik verwiesen.

Die in der wasserhaltigen Hämatit-Keimsuspension enthaltenen Hämatit-Keime umfassen solche mit einer Teilchengröße von 100 nm oder weniger und einer spezifische BET-Oberfläche von 40 m²/g bis 150 m²/g, (gemessen nach DIN 66131). Das Kriterium der Teilchengröße dann als erfüllt, wenn zumindest 90% der Hämatit-Keime eine Teilchengröße von 100 nm oder weniger, besonders bevorzugt von 30 nm bis 90 nm, aufweisen. Die im erfindungsgemäßen Verfahren eingesetzten wässrigen Hämatit-Keimsuspensionen umfassen typischerweise Hämatit-Keime mit einer runden, ovalen oder hexagonalen Teilchenform. Der feinteilige Hämatit weist typischerweise eine hohe Reinheit auf.

Als Fremdmetalle sind in dem für die Herstellung der Hämatit-Keimsuspension eingesetzten Eisenschrott in der Regel Mangan, Chrom, Aluminium, Kupfer, Nickel, Kobalt, und/oder Titan in unterschiedlichsten Konzentrationen enthalten, die bei der Umsetzung mit Salpetersäure auch zu Oxiden oder Oxyhydroxiden gefällt und in den feinteiligen Hämatit eingebaut werden können. Typischerweise weisen die in der wasserhaltigen Hämatit-Keimsuspension enthaltenen Hämatit-Keime einen Mangangehalt von 0,1 bis 0,7 Gew.%, bevorzugt 0,4 bis 0,6 Gew.%, auf. Mit Keimen dieser Qualität lassen sich farbstarke rote Eisenoxidpigmente herstellen.

Als Eisen wird das erfindungsgemäße Verfahren gewöhnlich Eisen in Form von Draht, Blechen, Nägeln, Granalien oder groben Spänen eingesetzt. Dabei sind die einzelnen Teile von beliebiger Form und weisen üblicherweise eine Dicke (z.B. gemessen als Durchmesser eines Drahtes oder als Dicke eines Bleches) von ca. 0,1 Millimetern bis zu ca. 10 mm Millimetern auf. Die Größe von Drahtbündeln oder von Blechen, die in das Verfahren eingesetzt werden, bemisst sich üblicherweise nach praktikablen Gesichtspunkten. So muss der Reaktor mit diesem Einsatzmaterial ohne Schwierigkeiten befüllt werden können, was in der Regel durch ein Mannloch erfolgt. Solches Eisen wird unter anderem als Schrott, oder als Nebenprodukt in der Metallverarbeitungs-Industrie, beispielsweise Stanzbleche, erzeugt.

Das im erfindungsgemäßen Verfahren eingesetzte Eisen weist in der Regel einen Eisengehalt von >90 Gew% auf. Als Verunreinigungen treten in diesem Eisen üblicherweise Fremdmetalle wie z.B. Mangan, Chrom, Silizium, Nickel, Kupfer, und andere Elemente auf. Es kann jedoch auch ohne Nachteile Eisen mit einem höheren Reinheitsgrad eingesetzt werden. Typischerweise wird Eisen in einer Menge zwischen 20 und 150 g/l bezogen auf das Volumen der flüssigen Reaktionsmischung zu Beginn der erfindungsgemäßen Umsetzung eingesetzt. In einer weiteren bevorzugten Ausführungsform wird das Eisen, bevorzugt in Form von Stanzblechen oder Drähten, auf der Vorlage für Eisen über deren Fläche mit einer bevorzugten Schüttdichte von kleiner 2000 kg/m³, besonders bevorzugt kleiner 1000 kg/m³ verteilt. Die Schüttdichte kann beispielsweise durch Biegen von Blechen zumindest einer Eisenqualität und/oder durch gezieltes Legen des Eisens realisiert werden. Dies führt dazu, dass typischerweise mehr als 90 Volumenprozent des unter der Eisenvorlage eingeblasenen sauerstoffhaltigen Gases die Eisenvorlage passiert, ohne dass sich das sauerstoffhaltige Gas unter der Eisenvorlage aufstaut.

Das im erfindungsgemäßen Verfahren eingesetzte sauerstoffhaltige Gas ist bevorzugt Sauerstoff oder Luft, entweder allein oder in Verbindung mit anderen Gasen, beispielsweise Stickstoff und/oder Stickoxiden. Das Begasungsvolumen des sauerstoffhaltigen Gases wird über geeignete Vorrichtungen im m³ gemessen und auf das Volumen des Gases bei Normbedingungen (1013 mbar, 0°C, sogenannte Normkubikmeter) bezogen. Das Begasungsvolumen in Normkubikmeter wird dann auf das Volumen der flüssigen Reaktionsmischung, auf die Begasungsfläche und/oder auf die Zeit bezogen. Erfindungsgemäß wird der Parameter "Begasungsvolumen des sauerstoffhaltige Gases bezogen auf Volumen der flüssigen Reaktionsmischung und Zeit" in der Einheit "m³ sauerstoffhaltiges Gas / m³ flüssige Reaktionsmischung / Stunde" sowie der Parameter "Begasungsvolumen des sauerstoffhaltigen Gases bezogen auf Begasungsfläche und Zeit" in der Einheit "m³ sauerstoffhaltiges Gas / m² Begasungsfläche / Stunde" angegeben. Werden mehr als ein Gas getrennt in die flüssige Reaktionsmischung eingespeist, so werden die Begasungsvolumina der einzelnen Gases addiert und auf die anderen Parameter "Volumen der flüssigen Reaktionsmischung", "Begasungsfläche" oder "Zeit" bezogen.

Bei dem erfindungsgemäßen Verfahren entsteht die Hämatit-Pigmentsuspension und ein stickoxidhaltiger Stoffstrom. Dieser stickoxidhaltige Stoffstrom weist typischerweise 1 bis 200 g/m³ nitrose Gase (berechnet als g/m³ NO₂ bezogen auf wasserfreies Gas) und/oder 0,5 bis 50 g/m³ N₂O (bezogen auf wasserfreies Gas) auf. Der Gehalt an nitrosen Gasen und Distickstoffmonoxid kann in diesen Stoffströmen in weiten Bereichen schwanken. Dieser stickoxidhaltige Stoffstrom weist üblicherweise einen Wasseranteil auf, der üblicherweise der Wasserdampfsättigung bei der gegebenen Reaktionstemperatur entspricht. Beispielsweise beträgt bei der Wasseranteil im stickoxidhaltigen Stoffstrom von ca. 50 Gew.% bei einer Reaktionstemperatur von 80°C. Da der stickoxidhaltige Stoffstrom aus der wässrigen Reaktionsmischung entweicht, die üblicherweise eine Temperatur von 70 bis 120 °C, bevorzugt von 70 bis 99°C aufweist, hat der stickoxidhaltige Stoffstrom beim Austritt aus der wässrigen Reaktionsmischung dieselbe Temperatur. Nach dem Austritt aus der wässrigen Reaktionsmischung kommt der stickoxidhaltige Stoffstrom in Kontakt mit Teilen der Reaktionsvorrichtung, die eine andere Temperatur, in der Regel eine niedrigere Temperatur, aufweisen. Dadurch kann es zur Kondensation des im stickoxidhaltigen Stoffstroms enthaltenen Wassers kommen, das in ihm entweder gasförmig oder dampfförmig vorliegt. Dadurch ändert sich der Wassergehalt im stickoxidhaltigen Stoffstrom, und ggf. auch der Gehalt an darin gelöstem NOₓ und/oder N₂O. Deshalb wird im Zusammenhang mit dieser Erfindung der Gehalt an NOₓ und/oder N₂O in Gew.% bezogen auf wasserfreies Gas bestimmt und angegeben. Praktischerweise wird eine Probe des zu messenden Gases zunächst über eine Kühleinrichtung, beispielsweise eine mit Eiswasser gekühlte Gaswaschflasche, geleitet, sodass das getrocknete Gas eine Temperatur von maximal 40°C aufweist. Dabei sinkt der Wasseranteil typischerweise auf 40 bis 50 g Wasserdampf/m³ Luft. Anschließend erfolgt die Messung der Gaszusammensetzung bezüglich der Komponenten NOₓ, N₂O und O₂ und gegebenenfalls N₂. Die Bestimmung der Gewichtsanteile der einzelnen Gase wird im Abschnitt der Beschreibung "Beispiele und Methoden" näher beschrieben.

In einer Ausführungsform erfolgt die erfindungsgemäße Umsetzung des Eisens, der Hämatit-Keimsuspension, enthaltend Hämatit-Keime, die eine Teilchengröße von 100 nm oder weniger und eine spezifische BET-Oberfläche von 40 m²/g bis 150 m²/g (gemessen nach DIN 66131) aufweisen, und der Eisen(II)nitratlösung in Gegenwart von zumindest einem sauerstoffhaltigen Gas bei Temperaturen von 70 bis 120 °C, bevorzugt von 70 bis 99°C derart, dass das Eisen auf einer Vorlage für Eisen bereitgestellt wird, indem das Eisen gleichmäßig mit einer bevorzugten Schüttdichte von kleiner 2000 kg/m³, besonders bevorzugt kleiner 1000 kg/m³ auf der Vorlage für Eisen verteilt wird. Das auf der Vorlage für Eisen verteilte Eisen wird auch Eisenschüttung genannt. Die Schüttdichte der Eisenschüttung kann durch Biegen von zumindest einer Eisenqualität und/oder durch gezieltes Legen des Eisens realisiert werden. Das Eisen wird hierbei so auf die Vorlage für Eisen gelegt, dass das zumindest eine sauerstoffhaltige Gas durch die Zwischenräume zwischen den Eisenstücken hindurchströmen kann, um in den Kontakt mit dem Eisen zu gelangen. Die Vorlage für Eisen ermöglicht einen Austausch von zumindest der Reaktionsmischung und sauerstoffhaltigem Gas durch in der Vorlage vorhandene Öffnungen. Typische Ausführungsformen für die Vorlage für Eisen können Siebböden, Lochböden oder Gitter darstellen. Das Verhältnis zwischen der kumulierten Fläche an Öffnungen und der gesamten Fläche der Vorlage für Eisen ist typischerweise zumindest 0,1. Der obere Wert des Verhältnisses zwischen der kumulierten Fläche an Öffnungen und der gesamten Fläche definiert sich an den technischen Rahmenbedingungen, die durch das auf der Vorlage für Eisen 14 liegende Eisen vorgegeben sind, beispielsweise Größe und Form der Eisenteile und Gewicht der Eisenschüttung. Bevorzugt ist das Verhältnis zwischen der kumulierten Fläche an Öffnungen und der gesamten Fläche der Vorlage für Eisen 14 so groß wie möglich. Die für das Durchströmen der Reaktionsmischung durch die Vorlage für Eisen erforderlichen Öffnungen sind typischerweise für die Wahl des Eisenrohstoffs geeignet. Ein Durchfallen der Eisens durch die Vorlage wird typischerweise dadurch weitestgehend vermieden. Die Vorlage für Eisen kann vom Durchmesser dem Reaktorinnendurchmesser entsprechen, oder auch kleiner ausgelegt werden. Bevorzugt ist der Durchmesser der Vorlage für Eisen kleiner als der Reaktorinnendurchmesser. In diesem Fall wird an der Eisenvorlageeinrichtung eine äußere Begrenzung angebracht, die ein Herabfallen von Eisen verhindert.

Diese äußere Begrenzung kann Suspensions-durchlässig, beispielsweise ausgeführt als Gitter, oder Suspensions-undurchlässig sein und beispielsweise die Form einer Röhre oder eines oben offenen Quaders entsprechen. Mögliche Öffnungen in der äußeren Begrenzung sind so ausgelegt, dass ein Durchfallen von Eisen verhindert wird. Bevorzugt wird eine undurchlässige Wand, zumindest im unteren Bereich, beispielsweise 10-50% der Höhe der Begrenzung. Im oberen Bereich, beispielsweise von 50% bis 90% der Höhe der äußeren Begrenzung, gemessen von der Vorlage für Eisen, können seitliche Öffnungen, z.B. in Form von Gittern, Löchern angebracht werden, die ein Herabfallen von Eisen verhindern und einen Suspensionsaustausch ermöglichen. Dies hat den Vorteil, dass in dem Reaktor mit unterschiedlichen Reaktionsvolumina gearbeitet werden kann, die naturgemäß zu unterschiedlichen Füllständen des Reaktors führen. Selbst dann, wenn die Oberfläche der flüssigen Reaktionsmischung niedriger als der obere Rand der äußeren Begrenzung ist, kann ein Austausch der flüssigen Reaktionsmischung aus dem Raum innerhalb und außerhalb der äußeren Begrenzung durch die Öffnungen in der äußeren Begrenzung erfolgen.

Typischerweise ist die Begrenzung so ausgelegt, dass bei der Durchführung des erfindungsgemäßen Verfahrens höchstens 10 Vol.% des der flüssigen Reaktionsmischung zugeführten sauerstoffhaltigen Gases von der Innenseite der Begrenzung durch die Öffnungen der Begrenzung auf die andere Seite der Begrenzung gelangen.

Der Eintrag des zumindest einen sauerstoffhaltigen Gases in die Reaktionsmischung findet bevorzugt mittels einer Begasungseinheit unterhalb der Vorlage für Eisen statt, sodass das zumindest eine sauerstoffhaltige Gas durch die Eisenschüttung hindurch strömt. Im Vergleich zur Reaktorhöhe befindet sich eine Begasungseinheit bevorzugt in der unteren Hälfte, bevorzugt im unterem Drittel, des Reaktors. Die nach dem erfindungsgemäßen Verfahren hergestellten Eisenoxid-Rot-Pigmente weisen die Modifikation Hämatit (α-Fe₂O₃) auf und werden daher auch im Zusammenhang mit dieser Erfindung Hämatit-Pigmente genannt.

Die Erfindung umfasst weiterhin zur Durchführung des erfindungsgemäßen Verfahrens geeignete Vorrichtungen. Diese werden nachstehend anhand der Figuren 1 bis 7 näher erläutert.

In den Figuren 1, 2, 5 und 6 ist die Darstellung einer Ausführungsform eines erfindungsgemäßen Reaktors als Seitenansicht eines mittleren vertikalen Querschnitts wiedergegeben.

In Figur 3 ist die Aufsicht auf den horizontalen Querschnitt des Reaktionsbehälters **11** aus Figur 1 in Höhe der Vorlage für Eisen **14** wiedergegeben.

In Figur 4 ist die Aufsicht auf den horizontalen Querschnitt auf die Flächen **GA** und **RA** in Höhe der Ebenen a des Reaktionsbehälters **11** wiedergegeben.

In Figur 7 ist ein Kompartiment 2 eines Reaktors 1 wiedergegeben.

Die Erfindung betrifft somit eine Vorrichtung umfassend zumindest einen Reaktor **1,** in dem erfindungsgemäße Verfahren durchgeführt wird. Anhand Reaktor **1** werden sich die oben genannten Ausführungsformen detaillierter beschrieben.

In den Figuren bedeuten:
- A: sauerstoffhaltiges Gas
- Fe: Eisen
- AQ-Fe(NO₃)₂: Eisen(II)nitrat-Lösung
- S-Fe₂O₃: Hämatit-Keimsuspension
- PAQ- Fe₂O₃: Hämatit-Pigmentsuspension
- H₂O: Wasser
- NOX: stickoxidhaltiger Stoffstrom (Abgas aus der Herstellung der Hämatit-Pigmentsuspension)
- GA: Begasungsfläche
- DGA: Durchmesser der Begasungsfläche GA
- RA: Innere Fläche des Reaktionsbehälters **11**
- DRA: Innendurchmesser des Reaktors

- 1: Reaktor zur Herstellung von Hämatit-Pigmentsuspension
- 11: Reaktionsbehälter
- 12: Äußere Begrenzung
- 13: Halterung für 12 und 14
- 14: Vorlage für Eisen
- 15: Begasungseinheit
- 21: Kompartiment
- 111: Einlass für Eisen(II)nitrat-Lösung, Hämatit-Keimsuspension und gegebenenfalls Wasser
- 112: Auslass für NOX
- 113: Auslass für Hämatit-Pigmentsuspension
- 211: Zulauf vom Kompartiment 21 zum Reaktionsbehälter 11
- 212: Ablauf vom Kompartiment 21 zum Reaktionsbehälter 11

Reaktor **1** umfasst typischerweise einen oder mehrere Reaktionsbehälter aus Werkstoffen, die gegen die Einsatzstoffe beständig sind. Einfach Reaktionsbehälter können z.B. gemauerte oder geflieste in die Erde eingelassene Behälter sein. Die Reaktoren umfassen beispielsweise auch Behälter aus Glas, salpetersäurebeständigem Kunststoffen, wie z.B. Polytetrafluorethylen (PTFE), Stahl, z.B. emaillierter Stahl, kunststoff- oder lackbeschichteter Stahl, Edelstahl mit der Werkstoffnummer 1.44.01. Die Reaktionsbehälter können offen oder geschlossen sein. In bevorzugten Ausführungsformen der Erfindung sind die Reaktionsbehälter geschlossen. Die Reaktionsbehälter sind typischerweise für Temperaturen zwischen 0 und 150°C und für Drucke von 0,05 MPa (0,05 Megapascal entsprechen 0,5 bar) bis 1,5 MPa (1,5 Megapascal entsprechen 15 bar) ausgelegt.

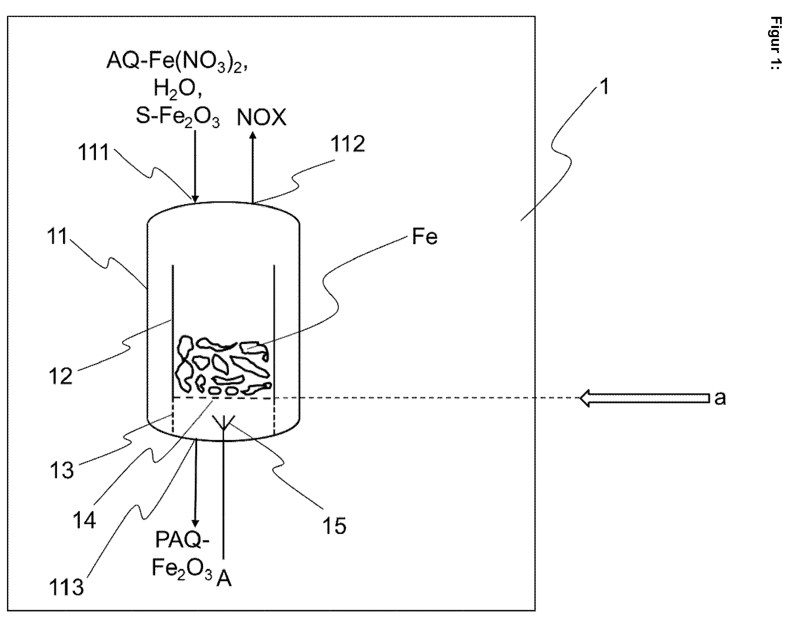

Eine Ausführungsform eines Reaktors **1** ist in Figur 1 wiedergegeben. Reaktor **1** weist zumindest Reaktionsbehälter **11,** äußere Begrenzung **12** der Vorlage für Eisen **14,** Halterung **13** für **12** und **14,** Begasungseinheit **15** für das zumindest eine sauerstoffhaltige Gas **A,** Einlass **111** für Eisen(II)nitrat-Lösung, Hämatit-Keimsuspension, und gegebenenfalls Wasser, Auslass **112** für einen stickoxidhaltigen Stoffstrom **NOX,** und Auslass **113** für die Hämatit-Pigmentsuspension auf.

In einer Ausführungsform ist die äußere Begrenzung **12** typischerweise eine als undurchlässige Wand, eine mit Öffnungen versehene Wand, durch Gitterstäbe, ein Sieb oder eine Kombination daraus ausgestaltet ist. Mögliche Öffnungen in der Begrenzungswand sollten so ausgelegt sein, dass ein Durchfallen von Eisen verhindert wird. Bevorzugt wird eine für die flüssige Reaktionsmischung undurchlässige Wand, zumindest im unteren Bereich, beispielsweise 10-50% der Höhe der Begrenzung **12,** gemessen von der Vorlage für Eisen **14.** Im oberen Bereich, beispielsweise von 50% bis 90% der Höhe der Begrenzung **12,** gemessen von der Vorlage für Eisen **14,** können seitliche Öffnungen, z.B. in Form von Gittern, Löchern angebracht werden, die ein Herabfallen von Eisen verhindern und einen Suspensionsaustausch ermöglichen. Typischerweise ist die Begrenzung so ausgelegt, dass bei der Durchführung des erfindungsgemäßen Verfahrens höchstens 10 Vol.% des stickoxidhaltigen Stoffstroms von der Innenseite der äußeren Begrenzung **12** durch die Öffnungen der äußeren Begrenzung **12** auf die andere Seite der äußeren Begrenzung **12** gelangen. In der Regel wird dies jedoch durch den Mammutpumpen-Effekt verhindert, der durch das nach oben strömende Gas in dem inneren Raum verursacht wird, der durch die äußere Begrenzung **12** gebildet wird,

Der obere Rand der äußeren Begrenzung **12** liegt bevorzugt unterhalb der Oberfläche der Reaktionsmischung, die an den über der Reaktionsmischung liegenden Gasraum grenzt, insbesondere wenn diese keine seitlichen Öffnungen (Gitter, Löcher, Sieb) für einen Stoffaustausch besitzt. Wenn der obere Rand der äußeren Begrenzung **12** oberhalb der Oberfläche der Reaktionsmischung liegt, die an den über der Reaktionsmischung liegenden Gasraum grenzt, und äußere Begrenzung **12** Suspensions-undurchlässig ist, ist kein Austausch der flüssigen Reaktionsmischung zwischen den Volumina innerhalb und außerhalb der Begrenzung **12** möglich. Dies führt dazu, dass sich die Anteile der flüssigen Reaktionsmischung, die innerhalb und außerhalb der äußeren Begrenzung liegen, nur über die Vorlage für Eisen miteinander vermischen können, was zu einer Verschlechterung der Raum-Zeit-Ausbeute, der Produktausbeute und der Produktqualität führen könnte.. Erfindungsgemäß wird das "Begasungsvolumen pro Fläche pro Zeit" in der Einheit "m³ sauerstoffhaltiges Gas pro m² Begasungsfläche pro Stunde" bezogen auf der Fläche gemessen, die von der Vorlage für Eisen **14** gebildet wird.

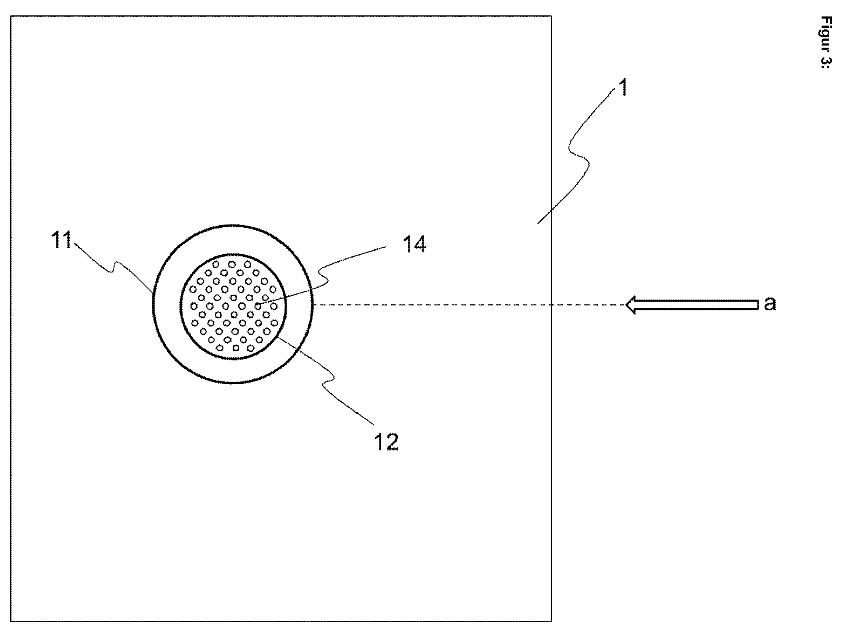

In den Figuren 1, 5 und 6, die eine Seitenansicht eines vertikalen Querschnitts des Reaktors **1** darstellen, ist durch einen Pfeil mit der Markierung gekennzeichnete Blickrichtung **a** markiert. Die Figur 3 zeigt einen horizontalen Querschnitt des Reaktionsbehälters **11** aus Figur 1 als Aufsicht dargestellt in der Höhe der Vorlage für Eisen **14.** In Figur 1 weist die äußere Begrenzung **12** die Form eines oben und unten offenen Zylinders auf. Hier weist die Vorlage für Eisen **14** die Fläche **GA** mit dem Durchmesser **DGA** auf. Die Fläche **GA** definiert die Begasungsfläche.

In unterschiedlichen Ausführungsformen kann Vorlage für Eisen **14** und somit auch die äußere Begrenzung **12** unterschiedliche Formen, wie kreisförmig, oval, dreieckig, viereckig, fünfeckig oder polygonal (jeweils bezogen auf den horizontalen Querschnitt der äußeren Begrenzung **12),** aufweisen. Damit weist auch die Begasungsfläche **GA** die entsprechende Form auf. Bevorzugt ist die Vorlage für Eisen **14** und die äußere Begrenzung **12** und damit auch die Begasungsfläche **GA** kreisförmig oder oval. Ebenfalls bevorzugt stehen die Vorlage für Eisen **14** und die äußere Begrenzung **12** orthogonal zueinander. Die Fläche der Vorlage für Eisen und die horizontale Fläche innerhalb der äußeren Begrenzung, oberhalb der sich 90% des Volumens befinden, das von der Vorlage für Eisen und der äußeren Begrenzung eingefasst wird, sind in diesem Fall identisch.

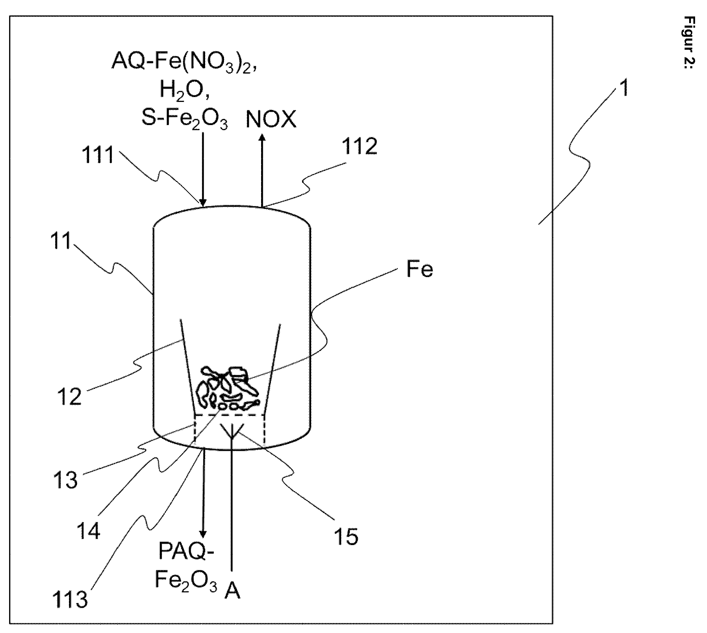

In weiteren Ausführungsformen kann die äußere Begrenzung **12** in unterschiedlichen Höhen unterschiedliche Durchmesser aufweisen. In Figur 2 läuft die äußere Begrenzung **12** beispielsweise nach oben konisch auseinander und bildet einen nach oben offenen Trichter. In diesen Fällen stehen die Vorlage für Eisen **14** und die äußere Begrenzung **12** nicht orthogonal zueinander. Maßgeblich für den Parameter Begasungsfläche ist hier die horizontale Fläche innerhalb der äußeren Begrenzung **12,** oberhalb der sich 90% des Volumens befinden, das von der Vorlage für Eisen und der äußeren Begrenzung eingefasst wird.

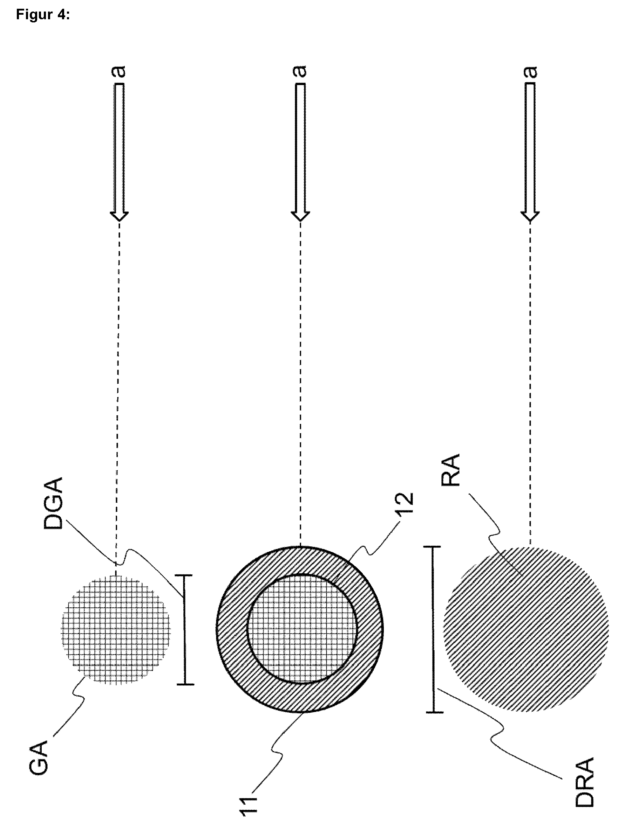

In Figur 4 ist die Aufsicht auf den horizontalen Querschnitt des Reaktionsbehälters **11** aus Figur 1 und auf die äußere Begrenzung **12** in Höhe der Vorlage für Eisen **14,** die von dem inneren Rand der äußeren Begrenzung **12** gebildet wird (Blickrichtung a), dargestellt. Die von der Vorlage für Eisen **14** gebildete Fläche ist die Begasungsfläche **GA,** die einen Durchmesser **DGA** aufweist und im oberen Teil von Figur 4 als karierte Fläche dargestellt ist. Die vom Umfang des inneren Randes der Reaktionsbehälters **11** gebildete Fläche ist die Reaktorfläche **RA,** die einen Durchmesser **DRA** aufweist und im unteren Teil von Figur 4 als schraffierte Fläche dargestellt ist.

Die Vorlage für Eisen **14** ermöglicht einen Austausch von zumindest der flüssigen Reaktionsmischung und des sauerstoffhaltigen Gases durch in der Vorlage vorhandene Öffnungen. Typische Ausführungsformen für die Vorlage für Eisen **14** können Siebböden, Lochböden oder Gitter darstellen. Das Verhältnis zwischen der kumulierten Fläche an Öffnungen und der gesamten Fläche der Vorlage für Eisen ist typischerweise zumindest 0,1. Der obere Wert des Verhältnisses zwischen der kumulierten Fläche an Öffnungen und der gesamten Fläche definiert sich an den technischen Rahmenbedingungen, die durch das auf der Vorlage für Eisen **14** liegende Eisen vorgegeben sind, beispielsweise Größe und Form der Eisenteile und Gewicht der Eisenschüttung. Bevorzugt ist das Verhältnis zwischen der kumulierten Fläche an Öffnungen und der gesamten Fläche der Vorlage für Eisen **14** so groß wie möglich. Die für das Durchströmen der Reaktionsmischung durch die Vorlage für Eisen erforderlichen Öffnungen sind typischerweise für die Wahl des Eisenrohstoffs geeignet. Ein Durchfallen der Eisens durch die Vorlage wird typischerweise dadurch weitestgehend vermieden. Bevorzugt ist die Begasungsfläche **GA** kleiner als die Fläche **RA.**

Dabei wird die Begasungsfläche so ausgelegt, dass bei einem Begasungsvolumen von 0,5 bis 2 m³ sauerstoffhaltigem Gas pro m³ Reaktionsvolumen pro Stunde ein Begasungsvolumen von 8 bis 32 m³, bevorzugt von 8 bis 24 m³, sauerstoffhaltigem Gas pro m² Begasungsfläche pro Stunde, oder bei einem Begasungsvolumen von 0,5 bis 1 m³ sauerstoffhaltigem Gas pro m³ Reaktionsvolumen pro Stunde ein Begasungsvolumen von 8 bis 16 m³, bevorzugt von 8 bis 12 m³, sauerstoffhaltigem Gas pro m² Begasungsfläche pro Stunde, oder bei einem Begasungsvolumen von 1 bis 2 m³ sauerstoffhaltigem Gas pro m³ Reaktionsvolumen pro Stunde ein Begasungsvolumen von 16 bis 32 m³, bevorzugt von 24 bis 32 m³, sauerstoffhaltigem Gas pro m² Begasungsfläche pro Stunde erzielt wird. Je nach Reaktordimensionierung ist der prozentuale Anteil, der die Begasungsfläche bezogen auf die Reaktorfläche ausmacht, unterschiedlich. Je niedriger das Reaktorvolumen ist, desto kleiner muss der prozentual Anteil der Begasungsfläche bezogen auf die Reaktorfläche sein. Der prozentuale Anteil der Begasungsfläche bezogen auf die Reaktorfläche lässt sich berechnen, indem der beabsichtigte Wert "m³ sauerstoffhaltiges Gas pro m² Begasungsfläche pro Stunde", beispielsweise 8 m³ sauerstoffhaltiges Gas pro m² Begasungsfläche pro Stunde, durch den beabsichtigten Wert "m³ sauerstoffhaltigem Gas pro m³ Reaktionsvolumen pro Stunde", beispielsweise 1 m³ sauerstoffhaltigem Gas pro m³ Reaktionsvolumen pro Stunde geteilt wird, wobei sich in diesem Beispiel ein Wert von 8 m errechnet und die Höhe des Reaktionsvolumens in dem Reaktor durch diesen Wert geteilt wird. Bei einer beispielhaften Höhe des Reaktionsvolumens von 1,05 m eines Reaktionsvolumens von 1 m³ errechnet sich der prozentuale Anteil der Begasungsfläche bezogen auf die Reaktorfläche zu 13 % (berechnet durch 1,05 m : 8 m). Bei einer beispielhaften Höhe des Reaktionsvolumens von 5,09 m eines Reaktionsvolumens von 100 m³ errechnet sich der prozentuale Anteil der Begasungsfläche bezogen auf die Reaktorfläche zu 64 % (berechnet durch 5,09 m : 8 m).

Die Begasungseinheit **15** befindet sich unterhalb der Vorlage für Eisen **14** und besteht beispielsweise aus einem oder mehreren Begasungsringen, durchbohrten Rohrleitungen, ringförmigen Rohrleitungen, sternförmig angebrachten Rohrleitungen, Zweistoffstrahlern (Injektoren, Ejektoren) oder Begasungsmatten. Die Begasungseinheit **15** kann auch in die Vorlage für Eisen **14** integriert sein. Die Integration der Begasungseinheit **15** in die Vorlage für Eisen **14** wird beispielsweise dadurch ausgeführt, dass die Begasungseinheit direkt mit der Vorlage mechanisch verbunden wird oder als ein Gitter aus durchlöcherten Röhren, das gleichzeitig als Vorlage für Eisen ausgestaltet wird.

Der Gaseintrag findet bevorzugt unterhalb der Vorlage für Eisen **14** statt, sodass das aus der Begasungseinheit **15** ausströmende Gas durch die Eisenschüttung hindurch gelangt. Im Vergleich zur Reaktorhöhe befindet sich die Begasungseinheit bevorzugt in der unteren Hälfte, bevorzugt im unterem Drittel, des Reaktors.

In der Ausführungsform gemäß Figur 1 ist die Begasungseinheit **15** unter der Vorlage für Eisen **14** angebracht. Dies gewährleistet, dass größer gleich oder mehr als 90 Volumenprozent des zumindest einen sauerstoffhaltigen Gases **A** durch die Vorlage für Eisen **14** und durch das Eisen **Fe** strömen und nur weniger als 10 Volumenprozent des zumindest einen sauerstoffhaltigen Gases **A** durch die Halterung **13** und dann zwischen der Wand des Reaktionsbehälters **11** und der äußeren Begrenzung der Begasungsfläche **12** in Richtung der Oberfläche der flüssigen Reaktionsmischung strömen. In der Regel wird dies jedoch durch den Mammutpumpen-Effekt verhindert, der durch das nach oben strömende Gas in dem inneren Raum, der durch die äußere Begrenzung **12** gebildet wird, verursacht wird. Durch den Eintrag des zumindest einen sauerstoffhaltigen Gases unter der Vorlage für Eisen **14** entsteht ein in Richtung der Oberfläche der Reaktionsmischung gerichteter Gasstrom, der zur Konvektion der flüssigen Reaktionsmischung an dem sich auf der Vorlage für Eisen **14** befindlichem Eisen vorbei führt. Das in die Reaktionsmischung einströmende zumindest eine sauerstoffhaltige Gas löst sich teilweise in der Reaktionsmischung. Die in der Reaktionsmischung gelösten Anteile des zumindest einen sauerstoffhaltigen Gases reagieren teilweise mit den anderen Komponenten der Reaktionsmischung, wodurch auch in der Reaktionsmischung gelöste Ammoniumverbindungen und/oder Stickoxide entstehen. Ein Teil der Stickoxide reagieren wiederum mit den Reaktionskomponenten. Ein Teil des zumindest einen sauerstoffhaltigen Gases und der entstehenden Stickoxide verlassen die Reaktionsmischung als stickoxidhaltiger Stoffstrom **NOX.**

In einer Ausführungsform ist die Vorlage für Eisen **14** typischerweise ein Sieb oder Gitter, das mit der Halterung **13** und der äußeren Begrenzung **12** mechanisch verbunden ist.

In einer weiteren Ausführungsform ist die Halterung **13** eine teilweise flüssigkeits- und/oder gasundurchlässige Wand, bevorzugt teilweise oder ganz bestehend aus einem Gitter oder Sieb.,

In einer weiteren Ausführungsform besteht die Halterung **13** aus Streben, die mit dem Boden oder der Seitenwand des Reaktionsbehälters **11** verbunden sind.

In einer weiteren Ausführungsform ist die Vorlage für Eisen **14** über deren gesamten Umfang mit der äußeren Begrenzung **12** und der Halterung **13** mechanisch verbunden, wie in Figur 1 dargestellt. Während der Durchführung des erfindungsgemäßen Verfahrens entsteht innerhalb der äußeren Begrenzung **12** ein nach oben gerichteter Stoffstrom und in den Raum zwischen der äußeren Begrenzung **12** und der Innenwand des Reaktors **11** ein nach unten gerichteter Stoffstrom, sodass die flüssige Reaktionsmischung in einem Kreislauf an dem Eisen vorbeibewegt wird.

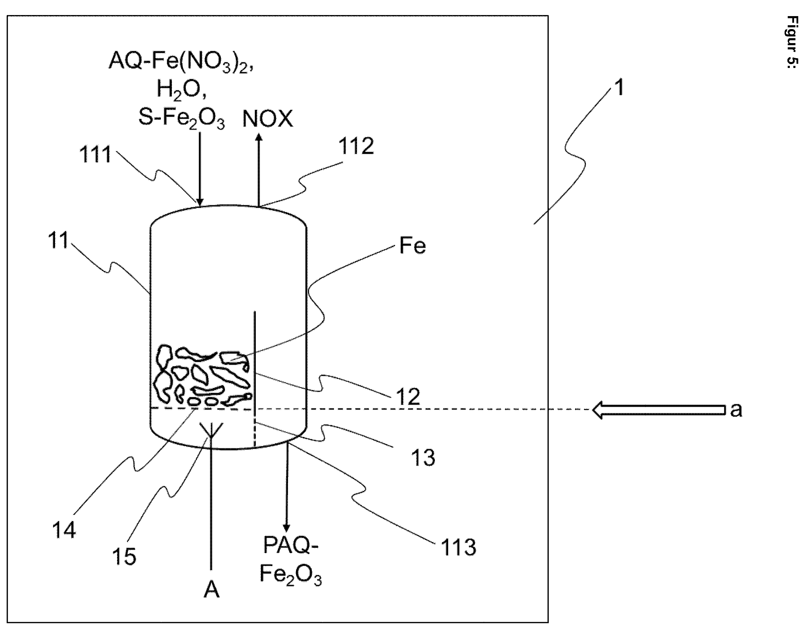

In einer weiteren Ausführungsform ist die Vorlage für Eisen **14** nur mit einem Teil ihres Umfang mit äußeren Begrenzung **12** und der Halterung **13** und mit dem anderen Teil ihres Umfangs direkt mit dem Reaktionsbehälter **11** mechanisch verbunden, wie in Figur 5 dargestellt. Während der Durchführung des erfindungsgemäßen Verfahrens entsteht zwischen der äußeren Begrenzung **12** und der Wand des Reaktionsbehälters **11** oberhalb der Vorlage für Eisen **14** ein nach oben gerichteter Stoffstrom und zwischen der äußeren Begrenzung **12** und der Wand des Reaktionsbehälters **11** seitlich von der Vorlage für Eisen **14** ein nach unten gerichteter Stoffstrom, sodass die Reaktionsmischung in einem Kreislauf an dem Eisen vorbeibewegt wird.

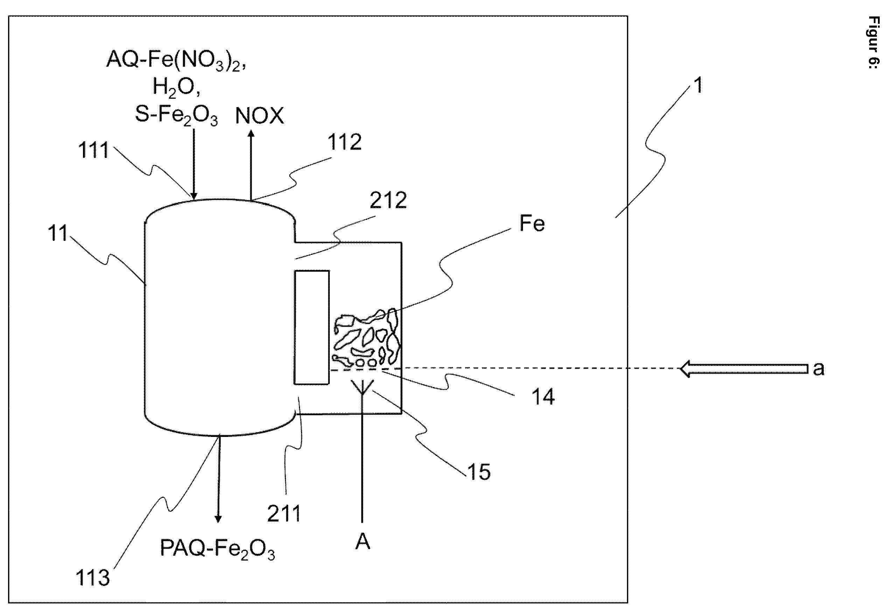

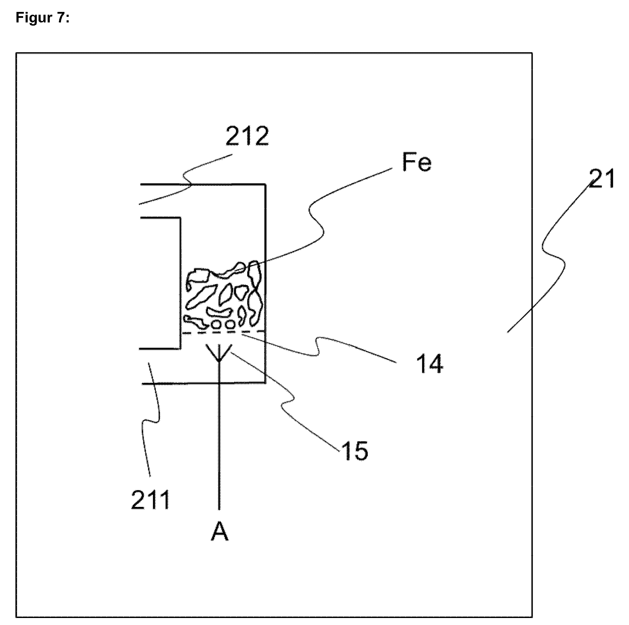

In einer weiteren Ausführungsform ist die Vorlage für Eisen **14** und die Begasungseinheit **15** in mindestens einem separaten Kompartiment **21** des Reaktionsbehälters **11** enthalten, wie in den Figuren 6 und 7 dargestellt. Das zumindest eine separate Kompartiment **21** ist durch einen Zulauf **211** und einen Ablauf 212 mit dem Reaktionsbehälter **11** verbunden. Der Zulauf **211** und der Ablauf **212** liegen bevorzugt unter der Oberfläche der Reaktionsmischung, die an den Gasraum im Reaktor grenzt. In dieser Ausführungsform ist die Begasungsfläche **GA wie** in den oben ausgeführten Ausführungsformen gemäß den Figuren 1 und 5 identisch mit der die Fläche der Vorlage für Eisen **14.** Sind mehrere separate Kompartimente vorhanden, wird der Parameter "m³ Begasungsvolumen von sauerstoffhaltigem Gas pro m² Begasungsfläche pro Stunde" über den Quotienten der Summe der einzelnen Begasungsvolumina der einzelnen Kompartimente und der Summe der Begasungsflächen der einzelnen Kompartimente berechnet.

In alternativen Ausführungsformen können Einlass **111** und/oder Auslass **112** und/oder Auslass **113** im Reaktionsbehälter **11** auch so gestaltet sein, dass sie durch die gleiche Öffnung, durch je einen Einlass oder Auslass für jedes einzelne Edukt und/oder Produkt oder durch jede beliebige Kombination davon realisiert werden.

In weiteren Ausführungsformen umfasst der Reaktor **1** zusätzlich einen Mischer (nicht in den Figuren dargestellt), beispielsweise einen Propellermischer, und/oder eine Pumpe, die die flüssige Phase aus dem Reaktor an einem Auslass entnimmt und dem Reaktor über eine Leitung wieder an anderer Stelle an einem Einlass zuführt. oder eben nicht. In einer weiteren bevorzugten Ausführungsform kann eine Heizung (nicht in den Figuren dargestellt) direkt im Reaktionsbehälter **11** realisiert sein, beispielsweise als Heizmantel, Heizkerze, und/oder als Heizschlange, oder durch Direkteintrag von heißem Wasser und/oder komprimiertem Wasserdampf in die flüssige Reaktionsmischung erfolgen.

Im Folgenden wird die Durchführung des erfindungsgemäßen Verfahrens beispielhaft beschrieben. Zur Durchführung des erfindungsgemäßen Verfahrens werden die Einsatzstoffe Eisen, gegebenenfalls Wasser, Eisen(II)nitrat-Lösung und Hämatit-Keimsuspension über einen Einlass, beispielsweise den Einlass **111,** in den Reaktionsbehälter, beispielsweise Reaktionsbehälter **11,** gegeben. Die Reaktionsmischung wird auf eine Temperatur von 70 bis 120 °C, bevorzugt von 70 bis 99°C aufgeheizt. Dabei wird durch Oxidation mit sauerstoffhaltigem Gas, wobei das sauerstoffhaltige Gas mit einem Begasungsvolumen von 0,5 bis 2 m³ sauerstoffhaltigem Gas pro m³ Reaktionsvolumen pro Stunde und einem Begasungsvolumen von 8 bis 32 m³, bevorzugt von 8 bis 24 m³, sauerstoffhaltigem Gas pro m² Begasungsfläche pro Stunde, oder einem Begasungsvolumen von 0,5 bis 1 m³ sauerstoffhaltigem Gas pro m³ Reaktionsvolumen pro Stunde und einem Begasungsvolumen von 8 bis 16 m³, bevorzugt von 8 bis 12 m³, sauerstoffhaltigem Gas pro m² Begasungsfläche pro Stunde, oder einem Begasungsvolumen von 1 bis 2 m³ sauerstoffhaltigem Gas pro m³ Reaktionsvolumen pro Stunde und einem Begasungsvolumen von 16 bis 32 m³, bevorzugt von 24 bis 32 m³, sauerstoffhaltigem Gas pro m² Begasungsfläche pro Stunde in die flüssige Reaktionsmischung zugegeben wird, Hämatit auf den Hämatitkeim gefällt, der sich während der Reaktion vergrößert, bis das Eisenoxid-Rot-Pigment den gewünschten Farbton erreicht hat. Die so hergestellten Hämatit-Pigmentsuspension **PAQ-Fe₂O₃** wird entweder in einen optionalen Lagerbehälter zwischengelagert (nicht in den Figuren dargestellt) und/oder direkt über einen Auslass, beispielsweise Auslass **113,** über eine mit dem Reaktionsbehälter kommunizierende Leitung in eine Abtrenneinrichtung (nicht in den Figuren dargestellt) transportiert, in der die Abtrennung des Pigments aus der Reaktionsmischung erfolgt. In einer bevorzugten Ausführungsform ist die zusätzliche mechanische Durchmischung, beispielsweise mittels eines Propellerrührers, und / oder durch eine zusätzliche hydraulische Durchmischung, beispielsweise durch eine Umpumpung der flüssigen Reaktionsmischung, der flüssigen Reaktionsmischung ausgeschlossen oder eben nicht.

Während des erfindungsgemäßen Verfahrens wird auf den in der flüssigen Phase enthaltenen Hämatit-Keim das Pigment aufgebaut, wodurch eine Hämatit-Pigmentsuspension erzeugt wird, dessen Farbwerte, bevorzugt dessen a*- und b*-Werte in der Lackabtestung, sich während der Reaktion durch die beim Pigmentaufbau sich ändernden Teilchengröße und/oder -morphologie ändern. Durch Messen der Farbwerte des in der Hämatit-Pigmentsuspension enthaltenen Hämatit-Pigments wird der Zeitpunkt bestimmt, zu dem das erfindungsgemäße Verfahren abgebrochen wird. Das erfindungsgemäße Verfahren wird abgebrochen, wenn das Hämatit-Pigment in der Lackabtestung den gewünschten Farbton, bevorzugt die gewünschten a*- und b*-Werte im Purton oder in der Aufhellung, aufweist. Dies erfolgt durch Beendigung der Begasung, gegebenenfalls durch gleichzeitiges Abkühlen der Reaktionsmischung auf eine Temperatur von unter 70°C. Typische Reaktionszeiten für die erfindungsgemäße Umsetzung liegen bei 10 bis 150 Stunden, abhängig vom gewünschten Farbton.

Die so hergestellten Hämatit-Pigmentsuspension, beispielsweise die Hämatit-Pigmentsuspension **PAQ-Fe₂O₃,** wird entweder in einen optionalen Lagerbehälter zwischengelagert (nicht in den Figuren dargestellt) und/oder direkt über einen Auslass, beispielsweise den Auslass **113,** über eine Leitung in die eine Abtrenneinrichtung (nicht in den Figuren dargestellt) transportiert, in der die Abtrennung des Pigments aus der Reaktionsmischung erfolgt.

In einer bevorzugten Ausführungsform erfolgt nach der erfindungsgemäßen Umsetzung die Abtrennung des Hämatit-Pigments von der Hämatit-Suspension nach üblichen Methoden, bevorzugt durch Filtration und/oder Sedimentation und/oder Zentrifugation. Ebenfalls bevorzugt erfolgt Waschen nach der Abtrennung erhaltenen Filterkuchens und nachfolgende Trocknung des Filterkuchens. Ebenfalls bevorzugt werden vor der Abtrennung des Hämatit-Pigments von der Hämatit-Pigmentsuspension ein oder mehrere Siebungsschritte, besonders bevorzugt mit unterschiedlichen Maschenweiten und mit absteigenden Maschenweiten, durchgeführt. Dies hat den Vorteil, dass dadurch Fremdkörper, beispielsweise Metallstücke, von der Hämatit-Pigmentsuspension abgetrennt werden, die sonst das Hämatit-Pigment verunreinigen würden.

Für die Abtrennung des Hämatit-Pigments von der Hämatit-Pigmentsuspension können alle dem Fachmann bekannten Verfahren durchgeführt werden, z.B. Sedimentation mit anschließender Abtrennung der wässrigen Phase oder Filtration über Filterpressen, beispielsweise über Membranfilterpressen.

In einer bevorzugten Ausführungsform des erfindungsgemäßen Verfahrens kann zumindest ein Sulfatsalz, beispielsweise Eisen(II)sulfat und/oder ein Alkali- oder Erdalkalisulfat, bevorzugt Eisen(II)sulfat und/oder Natriumsulfat, zur Hämatit-Pigmentsuspension während oder vor der Siebung und/oder während oder vor der Abtrennung gegeben werden. Dies hat den Vorteil, dass die Sedimentation des Hämatit-Pigments aus der Hämatit-Pigmentsuspension beschleunigt wird. Dies erleichtert die nachfolgende Abtrennung des Hämatit-Pigments. Weiterhin kann, wenn Eisen(II)sulfat verwendet wird, die Aufbaureaktion weiter durchgeführt werden. Anschließend findet eine Resteisenfällung mit Natronlauge statt, wobei der pH-Wert unter Luftbegasung durch Zugabe von einem alkalischen Fällungsmittel (z.B. NaOH, KOH, CaCO₃, Na₂CO₃, K₂CO₃, etc.) auf pH 3,5 bis 6, bevorzugt 4-5 eingestellt wird, bis der Eisen(II)Gehalt <0,1 g/l beträgt. Nach vollständigem Ausfällen wird die Begasung abgestellt und der pH-Wert durch weitere Zugabe des alkalischen Fällungsmittel auf pH 4-6 eingestellt.

Gegebenenfalls erfolgt anschließend zumindest eine Wäsche des so abgetrennten Sedimentes oder Filterkuchens. Gegebenenfalls erfolgt nach der Abtrennung und/oder der Wäsche eine Trocknung des so abgetrennten Hämatit-Pigments-, beispielsweise mit Filtertrocknern, Bandtrocknern, Knettrocknern, Spinflash-Trocknern, Trockenschränken oder Sprühtrocknern. Bevorzugt erfolgt die Trocknung mit Bandtrocknern, Tellertrocknern, Knettrocknern und/oder Sprühtrocknern.

Überraschenderweise wurde gefunden, dass bei dem erfindungsgemäßen Verfahren gegenüber dem Verfahren nach dem Stand der Technik, bei dem der Pigmentaufbau bei deutlich höheren Begasungsvolumina pro Reaktionsvolumen pro Stunde erfolgt, deutlich weniger Stickoxide in die Gasphase ausgetragen werden. Darüber hinaus wird durch die niedrigeren Begasungsvolumina im Vergleich zum Stand der Technik deutlich weniger Energie aus der auf 70 bis 120 °C, bevorzugt auf 70 bis 99°C erhitzten Reaktionsmischung in die Gasphase ausgetragen, die dann wieder als externe Energie, beispielsweise in Form von Dampf, in die Reaktionsmischung eingebracht werden muss. Bei dem Verfahren gemäß dem Stand der Technik, in dem die Begasungsmengen von 10 m³ Gasvolumen/m³ Reaktionsvolumen / Stunde Reaktionszeit verwendet werden, werden üblicherweise 1,7 kg Fe₂O₃ pro kg Fe(NO₃)₂ erzeugt. Bei dem erfindungsgemäßen Verfahren stammt im Vergleich zum Verfahren nach dem Stand der Technik zumindest der gleiche oder ein größerer Anteil des im Hämatit-Pigments enthaltenen Fe³⁺ aus dem Eisen und ein entweder der gleiche oder ein kleinerer Anteil des im Hämatit-Pigment enthaltenen Fe³⁺ aus dem Fe(NO₃)₂. Mit dem erfindungsgemäßen Verfahren werden mehr als 1,7 kg Fe₂O₃ pro kg Fe(NO₃)₂, bevorzugt von 1,8 bis 2,5 kg Fe₂O₃ pro kg Fe(NO₃)₂ erzeugt. Ist der Anteil des im Hämatit-Pigments enthaltenen Fe³⁺ aus dem Eisen größer, wird das Verfahren wirtschaftlicher, da zur Herstellung der gleichen Menge Hämatit weniger Eisen(II)nitratlösung benötigt wird, die im Gegensatz zum eingesetzten Eisen separat hergestellt werden muss.

Mit dem erfindungsgemäßen Verfahren und der erfindungsgemäßen Vorrichtung, in der das erfindungsgemäße Verfahren durchgeführt wird, ist es nun möglich, Eisenoxid-Rot-Pigmente nach dem Penniman-Verfahren mit Nitrat in hoher Qualität, in hohen Ausbeuten, energieeffizient und unter Vermeidung von Abgasen, die unerwünschte Reaktionsprodukte wie nitrose Gase oder Lachgas, enthalten, herzustellen.

### Beispiele und Methoden:

### Titration Eisen(II) und Eisen(III)bestimmung:

Der Gehalt an Eisen(II)nitrat kann indirekt über die Messung des Eisen(II)-Gehaltes über eine potentiometrischen Titration einer mit Salzsäure angesäuerten Probenlösung mit Cer(III)sulfat bestimmt werden.

### NOₓ-Messung

NOₓ-Messungen wurden mit einem Gasanalysator PG 250 der Firma Horriba, (Chemielumineszenz-Verfahren) durchgeführt. Angaben über NOₓ-Bildung wurden im Verhältnis zur Pigmentausbeute angegeben (gerechnet als NO₂, in g NO₂ / kg Pigment). In dem Gasanalysator wird durch eine Kühlfalle die Gasprobe entwässert. Die NOₓ-Emission, die bei der Herstellung der Ausgangsstoffe Hämatit-Keim und Eisennitrat gebildet wurden, sind nicht mit inbegriffen.

### N₂O-Messung

Zur Probenvorbereitung wird eine Probe des zu messenden Gases zunächst über eine Kühleinrichtung, beispielsweise eine mit Eiswasser gekühlte Gaswaschflasche, geleitet, sodass das getrocknete Gas eine Temperatur von maximal 40°C aufweist. Dabei sinkt der Wasseranteil typischerweise auf 40 bis 50 g Wasserdampf/m³ Luft. Lachgasmessungen wurden über eine quantitative gaschromatographische Bestimmung und/oder über Infrarotmessung durchgeführt. Angaben über N₂O-Bildung wurden im Verhältnis zur Pigmentausbeute angegeben (g N₂O/ kg Pigment). Die N₂O-Emission, die bei der Herstellung der Ausgangsstoffe Hämatit-Keim und Eisennitrat gebildet wurden, sind nicht mit inbegriffen.

### O₂-Messung

Zur Probenvorbereitung wird eine Probe des zu messenden Gases zunächst über eine Kühleinrichtung, beispielsweise eine mit Eiswasser gekühlte Gaswaschflasche, geleitet, sodass das getrocknete Gas eine Temperatur von maximal 40°C aufweist. Dabei sinkt der Wasseranteil typischerweise auf 40 bis 50 g Wasserdampf/m* Luft. Die Messung des Sauerstoffgehaltes in dem getrockneten sickoxidhaltigen Stoffstrom erfolgt beispielsweise über einen elektrochemischen Sensor, der selektiv die Sauerstoffkonzentration im Gasgemisch bestimmen kann. Die Messung des Sauerstoffgehaltes in dem getrockneten stickoxidhaltigen Stoffstrom ist auch mit anderen Methoden möglich. Da es sich bei dem Sauerstoffgehalt um eine absolute Stoffgröße handelt, die über den Vergleich mit Referenzproben absolut bestimmt werden kann, werden vom Fachmann hier nur Methoden verwendet, die über Referenzproben validiert wurden.

### N₂-Messung

Zur Probenvorbereitung wird eine Probe des zu messenden Gases zunächst über eine Kühleinrichtung, beispielsweise eine mit Eiswasser gekühlte Gaswaschflasche, geleitet, sodass das getrocknete Gas eine Temperatur von maximal 40°C aufweist. Dabei sinkt der Wasseranteil typischerweise auf 40 bis 50 g Wasserdampf/m³ Luft. Die Messung des Stickstoffgehaltes in dem getrockneten stickoxidhaltigen Stoffstrom erfolgt über Gaschromatographie. Hierfür werden Gasproben z.B. durch Auffüllen von evakuierten Gasprobenflaschen mit Abgas genommen und gaschromatographisch quantitativ bestimmt.. Die Messung des Stickstoffgehaltes in dem getrockneten stickoxidhaltigen Stoffstrom ist auch mit anderen Methoden möglich. Da es sich bei dem Stickstoffgehalt um eine absolute Stoffgröße handelt, die über den Vergleich mit Referenzproben absolut bestimmt werden kann, werden vom Fachmann hier nur Methoden verwendet, die über Referenzproben validiert wurden.

### Beispiel 1: (Vergleich)

69,9 kg Eisenblech mit einer Dicke von etwa 1 mm wurden in einem 1 m³-Reaktor (Innendurchmesser 1,0 m), ausgestattet mit einem kreisförmigen Siebboden (Maschenweite ca. 10 mm) mit Durchmesser 0,98 m und einer daraus resultierenden Fläche von 0,75 m² und einem Begasungsring vorgelegt. Der Begasungsring (20 cm Durchmesser) war unterhalb des Siebbodens angebracht, wobei das Eisenblech auf dem Siebboden gleichmäßig verteilt wurde. Anschließend wurden Wasser, Eisen(II)nitratlösung und Hämatit-Keimsuspension in den Mengen zugeben, so dass ein Volumen von 1000 Liter erreicht wurde und die Konzentration an Keim (als Fe₂O₃) 21 g/l und die Konzentration an Eisennitrat (berechnet als wasserfreies Fe(NO₃)₂) 44 g/l betrug. Das Gemisch wurde auf 85°C aufgeheizt und nach Erreichen der Temperatur mit 10 m³/h Luft (13 m³ Luft/m² Begasungsfläche/h) für 94 h begast. Anschließend wird die Reaktionsmischung über eine Filterpresse filtriert und das erhaltene Hämatit-Pigment mit Wasser gewaschen. Das Hämatit-Pigment wird nachfolgend bei 80°C bis zu einer Restfeuchte kleiner 5 Gew.% getrocknet. Anschließend wird der getrocknete Filterkuchen mechanisch mit einem Schroter zerkleinert. Das Hämatit-Pigment wird so in Pulverform in einer Ausbeute von 93,1 kg (entspricht 1,7 kg Fe₂O₃ pro kg Fe(NO₃)₂) erhalten. Der Parameter "kg Fe₂O₃ pro kg Fe(NO₃)₂" wird dadurch bestimmt, dass nach beendeter Reaktion das Volumen der flüssigen Reaktionsmischung und die Konzentration an Fe(NO₃)₂ gemessen wird. Aus der eingesetzten Menge Fe(NO₃)₂ vor der Reaktion und der verbliebenen Menge Fe(NO₃)₂ nach der Reaktion errechnet sich die Menge des bei der Reaktion verbrauchten Fe(NO₃)₂, das in das Verhältnis mit der erhaltenen Menge Hämatit-Pigment gesetzt wird.

### Beispiele 2 bis 7

Die Beispiele 2 bis 7 wurden in dem gleichen Reaktor in vergleichbarem Maßstab durchgeführt, wobei die identischen Bedingungen, sowie die identischen relativen Verhältnisse zwischen den Mengen der Einsatzstoffe und der Volumina der Lösungen eingestellt wurden. Als einziger Parameter wurden die Begasungsvolumina variiert. Die Ergebnisse der Versuche sind in Tabelle 1 angegeben.

### Beispiel 8 (erfindungsgemäß)

In einem Reaktionskessel mit einem Nutzvolumen von 1 m³ wurde ein zylindrisch geformten Einbau (Seitenwand ohne Öffnungen) mit Siebboden (Maschenweite ca. 10 mm) mit Durchmesser 0,28 m und 0,8 m Höhe und einer Begasungseinheit unterhalb dieser Vorrichtung eingebaut.

In dieses nach oben geöffnete Rohr, welches von unten den Siebboden und die Begasungseinheit besitzt, wurden 25 kg Eisenblech eingefüllt. Anschließend wurden Wasser, Eisen(II)nitratlösung und Hämatit-Keimsuspension in den Mengen zugeben, so dass ein Volumen von 1000 Liter erreicht wurde und die Konzentration an Keim (als Fe₂O₃) 21 g/l und die Konzentration an Eisennitrat (berechnet als wasserfreies Fe(NO₃)₂) 44 g/l betrug. Das Gemisch wurde auf 85°C aufgeheizt und nach Erreichen der Temperatur mit 0,5 m³/h Luft (entspricht 0,5 m³ Luft/m³ Reaktionsvolumen/h (entspricht 8 m³ Luft/m² Begasungsfläche/h) für 48 h begast. Anschließend wird die Reaktionsmischung über eine Filterpresse filtriert und das erhaltene Hämatit-Pigment mit Wasser gewaschen. Das Hämatit-Pigment wird nachfolgend bei 80°C bis zu einer Restfeuchte kleiner 5 Gew.% getrocknet. Anschließend wird der getrocknete Filterkuchen mechanisch mit einem Schroter zerkleinert.

Die Beispiele 9 bis 12 (erfindungsgemäß) wurden in dem gleichen Reaktor in vergleichbarem Maßstab durchgeführt, wobei die identischen Bedingungen, sowie die identischen relativen Verhältnisse zwischen den Mengen der Einsatzstoffe und der Volumina der Lösungen eingestellt wurden. Als einziger Parameter wurden die Begasungsvolumina variiert. Die Ergebnisse der Versuche sind in Tabelle 2 angegeben

**Tabelle 1: Begasungsvolumina (Vergleichsbeispiele)**

| **Beispiel** | **Begasungsvolumen pro Reaktionsvolumen pro Zeit [m3/m3/h]** | **Begasungsvolumen pro Begasungsfläche pro Zeit [m³/m²/h]** | **Pigmentqualität** | **kg Fe₂O₃ gebildet/kg Fe(NO₃)₂ verbraucht** |
|---|---|---|---|---|
| 1 | 1,3 | 1 | unzureichend | 0.4 |
| 2 | 2,7 | 2 | unzureichend | 0.6 |
| 3 | 10 | 7,5 | Gut | 1,7 |
| 4 | 12,0 | 9 | Gut | 2.1 |
| 5 | 17,3 | 13 | Gut | 1.7 |
| 6 | 21,3 | 16 | Gut | 1.8 |
| 7 | 28 | 21 | Gut | 1.9 |

**Tabelle 2: Begasungsvolumina (erfindungsgemäß)**

| **Beispiel** | **Begasungsvolumen pro Reaktionsvolumen pro Zeit [m3/m3/h]** | **Begasungsvolumen pro Begasungsfläche pro Zeit [m³/m²/h]** | **Pigmentqualität** | **kg Fe₂O₃ gebildet/kg Fe(NO₃)₂ verbraucht** |
|---|---|---|---|---|
| 8 | 0,5 | 8,0 | Gut | 2,3 |
| 9 | 0,55 | 9,0 | Gut | 2,3 |
| 10 | 0,8 | 13,0 | Gut | 2,2 |
| 11 | 1 | 16,0 | Gut | 2,1 |
| 12 | 1,3 | 21,0 | Gut | 2,0 |

## Patentansprüche

1. Vorrichtung zur Herstellung von Hämatit umfassend zumindest
• Reaktionsbehälter (11),
• äußere Begrenzung (12)
• Vorlage für Eisen (14),
• Halterung (13) für äußere Begrenzung (12) und Vorlage für Eisen (14)
• zumindest eine Begasungseinheit (15) für sauerstoffhaltiges Gas
• Einlass (111) für Eisen(II)nitrat-Lösung, Hämatit-Keimsuspension, und gegebenenfalls Wasser
• Auslass (112) für einen stickoxidhaltigen Stoffstrom (NOX) und
• Auslass (113) für die Hämatit-Pigmentsuspension.

2. Vorrichtung zur Herstellung von Hämatit nach Anspruch 1, wobei die äußere Begrenzung (12) als eine undurchlässige Wand, eine mit Öffnungen versehene Wand, durch Gitterstäbe, ein Sieb oder eine Kombination daraus ausgestaltet ist.

3. Vorrichtung zur Herstellung von Hämatit nach Anspruch 1 oder 2, wobei die äußere Begrenzung (12) im unteren Bereich, bevorzugt von 10 bis 50% der Höhe der Begrenzung, gemessen von der Vorlage für Eisen (14), für die flüssige Reaktionsmischung undurchlässig ist.

4. Vorrichtung zur Herstellung von Hämatit nach einem der Ansprüche 1 bis 3, wobei die äußere Begrenzung (12) im oberen Bereich, bevorzugt von 50 bis 90% der Höhe der Begrenzung, gemessen von der Vorlage für Eisen (14), für die flüssige Reaktionsmischung durchlässig ist.

5. Vorrichtung zur Herstellung von Hämatit nach einem der Ansprüche 1 bis 4, wobei die äußere Begrenzung (12) um den vollen Umfang mit der Vorlage für Eisen (14) verbunden ist.

6. Vorrichtung zur Herstellung von Hämatit nach einem der Ansprüche 1 bis 4, wobei die äußere Begrenzung (12) mit einem Teil des Umfangs mit der Vorlage für Eisen (14) und der andere Teil des Umfangs der Vorlage für Eisen (14) mit der Innenwand des Reaktors (11) verbunden ist.

7. Vorrichtung zur Herstellung von Hämatit nach einem der Ansprüche 1 bis 6, wobei die von der Vorlage für Eisen (14) gebildete Fläche die Begasungsfläche (GA) darstellt, und die vom Umfang des inneren Randes der Reaktionsbehälters (11) gebildete Fläche die Reaktorfläche (RA) darstellt, und dass Verhältnis zwischen der Begasungsfläche (GA) und der Reaktorfläche (RA) so ausgelegt ist, dass
• bei einem Begasungsvolumen von 0,5 bis 2 m³ sauerstoffhaltigem Gas pro m³ Reaktionsvolumen pro Stunde ein Begasungsvolumen von 8 bis 32 m³, bevorzugt von 8 bis 24 m³, sauerstoffhaltigem Gas pro m² Begasungsfläche pro Stunde, oder
• einem Begasungsvolumen von 0,5 bis 1 m³ sauerstoffhaltigem Gas pro m³ Reaktionsvolumen pro Stunde ein Begasungsvolumen von 8 bis 16 m³, bevorzugt von 8 bis 12 m³, sauerstoffhaltigem Gas pro m² Begasungsfläche pro Stunde, oder
• einem Begasungsvolumen von 1 bis 2 m³ sauerstoffhaltigem Gas pro m³ Reaktionsvolumen pro Stunde ein Begasungsvolumen von 16 bis 32 m³, bevorzugt von 24 bis 32 m³, sauerstoffhaltigem Gas pro m² Begasungsfläche pro Stunde
verwirklicht wird.

8. Verfahren zur Herstellung von Hämatit umfassend zumindest umfassend die Umsetzung von zumindest
• Eisen und
• einer wasserhaltigen Hämatit-Keimsuspension, enthaltend Hämatit-Keime, die eine Teilchengröße von 100 nm oder weniger und eine spezifische BET-Oberfläche von 40 m²/g bis 150 m²/g, (gemessen nach DIN 66131) aufweisen, und
• einer Eisen(II)nitratlösung, und
• sauerstoffhaltigem Gas
bei Temperaturen von 70 bis 120 °C, bevorzugt von 70 bis 99°C, wobei eine flüssige Reaktionsmischung erzeugt wird, die zumindest eine flüssige Phase und darin suspendiertes Hämatit enthält, wobei das sauerstoffhaltige Gas mit
• einem Begasungsvolumen von 0,5 bis 2 m³ sauerstoffhaltigem Gas pro m³ Reaktionsvolumen pro Stunde und einem Begasungsvolumen von 8 bis 32 m³, bevorzugt von 8 bis 24 m³, sauerstoffhaltigem Gas pro m² Begasungsfläche pro Stunde, oder
• einem Begasungsvolumen von 0,5 bis 1 m³ sauerstoffhaltigem Gas pro m³ Reaktionsvolumen pro Stunde und einem Begasungsvolumen von 8 bis 16 m³, bevorzugt von 8 bis 12 m³, sauerstoffhaltigem Gas pro m² Begasungsfläche pro Stunde, oder
• einem Begasungsvolumen von 1 bis 2 m³ sauerstoffhaltigem Gas pro m³ Reaktionsvolumen pro Stunde und einem Begasungsvolumen von 16 bis 32 m³, bevorzugt von 24 bis 32 m³, sauerstoffhaltigem Gas pro m² Begasungsfläche pro Stunde
in die flüssige Reaktionsmischung zugegeben wird

9. Verfahren zur Herstellung von Hämatit nach Anspruch 8, wobei die Umsetzung von zumindest Eisen, einer wasserhaltigen Hämatit-Keimsuspension, einer Eisen(II)nitratlösung, und sauerstoffhaltigem Gas ohne eine zusätzliche mechanische Durchmischung und / oder ohne eine zusätzliche hydraulische Durchmischung durchgeführt wird.

10. Verfahren zur Herstellung von Hämatit nach Anspruch 8, wobei die Umsetzung von zumindest Eisen, einer wasserhaltigen Hämatit-Keimsuspension, einer Eisen(II)nitratlösung, und sauerstoffhaltigem Gas mit einer zusätzlichen mechanischen Durchmischung und / oder mit einer zusätzlichen hydraulischen Durchmischung durchgeführt wird.

11. Verfahren nach einem der Anspruche 8 bis 10, **dadurch gekennzeichnet, dass** die Umsetzung so lange durchgeführt wird, bis das Hämatit-Pigment den gewünschten Farbton aufweist.

12. Verfahren nach einem der Ansprüche 8 bis 11, umfassend weiterhin die Abtrennung des Hämatit-Pigments von der Reaktionsmischung.

13. Verfahren nach einem der Ansprüche 8 bis 12, **dadurch gekennzeichnet, dass** das in der Hämatit-Pigmentsuspension enthaltene Hämatit-Pigment die Modifikation α-Fe₂O₃ aufweist.

14. Verfahren nach einem der Ansprüche 8 bis 13 durchgeführt in einer Vorrichtung nach einem der Ansprüche 1 bis 7.

15. Verwendung einer Vorrichtung nach einem der Ansprüche 1 bis 7 zur Herstellung von Hämatit-Pigmenten.
